# EUROPÄISCHE PATENTANMELDUNG

(11) **EP 3 040 705 A1**
(43) Veröffentlichungstag der Anmeldung: **06.07.2016**
(21) Anmeldenummer: 14200634.5
(22) Anmeldetag: 30.12.2014
(51) Int. Cl.: G01N 15/14, G02B 21/36, H04N 9/04, G02B 21/10, G06T 7/00

(54) **Verfahren zum Bestimmen von Partikeln**

(71) Anmelder: Grundfos Holding A/S, 8850 Bjerringbro (DK)
(72) Erfinder: Dahlqvist, Mathis, 7100 Vejle (DK); Schmidt, Christian, 23669 Niendorf /Ostsee (DE); Højris, Bo, 8300 Odder (DK)
(74) Vertreter: Patentanwälte Vollmann & Hemmer

(57) **Zusammenfassung**

Das Verfahren dient zum Bestimmen von Partikeln (3), insbesondere Bakterien in Flüssigkeit, und arbeitet unter Verwendung einer bildgebenden optischen Vorrichtung mit einer Lichtquelle (1), mit einem optischen Sensor (4) mit einem Feld von lichtempfindlichen Pixeln und mit einer zwischen Lichtquelle (1) und Sensor (4) angeordneten zu untersuchenden Flüssigkeitsprobe. Es werden Kennzeichen von mindestens einem bildmäßig erfassten Partikel (3) mit Kennzeichen einer Kennzeichensammlung zur Bestimmung des erfassten Partikels (3) verglichen, wobei die Bilderfassung in Dunkelfeldtechnik erfolgt und ein lichtempfindliches Pixel mehrere Subpixel aufweist, die zur Bilderfassung genutzt werden.

## Beschreibung

Die Erfindung betrifft ein Verfahren zum Bestimmen von Partikeln in einer Flüssigkeit, insbesondere von Bakterien in Wasser mit den im Oberbegriff des Anspruchs 1 angegebenen Merkmalen.

Derartige Verfahren zum optischen Erfassen von Partikeln in einer Flüssigkeit, insbesondere zum Bestimmen oder zumindest zum Klassifizieren von Partikeln, zählen zum Stand der Technik. Es wird in diesem Zusammenhang auf EP 2 469 264 A1, WO 2010/063293 A1 und WO 2014/094790 A1 verwiesen. Dort sind Verfahren beschrieben, bei denen die Erfassung von Partikeln in Flüssigkeit mittels einer optischen Vorrichtung erfolgt, welche eine Lichtquelle und einen optischen Sensor mit einem Feld von lichtempfindlichen Pixeln aufweist, wobei zwischen der Lichtquelle und dem Sensor eine zu untersuchende Flüssigkeitsprobe angeordnet ist und bei welchen zum Bestimmen von Partikeln Kennzeichen von mindestens einem bildmäßig erfassten Partikel mit Kennzeichen einer Kennzeichensammlung zur Bestimmung oder zumindest zur Klassifizierung des erfassten Partikels verwendet, insbesondere verglichen werden. Die optische Erfassung der Flüssigkeitsprobe erfolgt dabei vorzugsweise in quasi stationärem Zustand, also dann, wenn sich die Partikel innerhalb der Flüssigkeit soweit beruhigt haben, dass sie entweder gravitationsbedingt abgesunken, aufgeschwommen oder in einem stationären Schwebezustand befindlich sind, also ihre Position zwischen Lichtquelle und Sensor im Wesentlichen nicht ändern. Dieses Verfahren ist zum Bestimmen von größeren Partikeln, beispielsweise Schwebeteilchen, feinstem Sand oder dergleichen, wie sie gelegentlich im Wasser mitgeführt werden, gut geeignet. Insbesondere jedoch für die Untersuchung von Trinkwasser, bei welchem es um die Bestimmung von Art und Anzahl von Bakterien, beispielsweise E.coli-Bakterien (E-scherichia coli) ankommt, stößt dieses Verfahren an seine Grenzen, da diese kleinen Partikel oft schwer oder gar nicht im Bild auszumachen sind.

Der vorliegenden Erfindung liegt daher die Aufgabe zugrunde, ein gattungsgemäßes Verfahren dahingehend zu verbessern, dass insbesondere kleine Partikel, in der Größenordnung von Bakterien mit technisch möglichst geringem Aufwand zuverlässig bestimmt werden können. Dabei soll die bevorzugte Anwendung zur Bestimmung von Bakterien im Trinkwasser sein.

Diese Aufgabe wird gemäß der Erfindung durch ein Verfahren mit den in Anspruch 1 aufgeführten Merkmalen gelöst. Vorteilhafte Ausgestaltungen der Erfindung sind in den Unteransprüchen, der nachfolgenden Beschreibung und der Zeichnung angegeben. Hierbei können die in den Unteransprüchen und der Beschreibung angegebenen Merkmale jeweils für sich aber auch in geeigneter Kombination die erfindungsgemäße Lösung gemäß Anspruch 1 weiter ausgestalten.

Das erfindungsgemäße Verfahren dient zum Bestimmen von Partikeln oder zumindest zum Klassifizieren in Flüssigkeit, insbesondere von Bakterien in Wasser, beispielsweise bei der regelmäßigen Überprüfung des Trinkwassers im Hinblick auf Keime, und wird unter Verwendung einer bildgebenden optischen Vorrichtung durchgeführt, die eine Lichtquelle aufweist und einen optischen Sensor mit einem Feld von lichtempfindlichen Pixeln. Zwischen Lichtquelle und Sensor ist die zu untersuchende Flüssigkeitsprobe angeordnet. Bei dem Verfahren werden Kennzeichen von mindestens einem bildmäßig mit der optischen Vorrichtung erfassten Partikel mit Kennzeichen einer Kennzeichensammlung zur Bestimmung oder Klassifizierung des erfassten Partikels verwendet. Die Kennzeichen werden insbesondere verglichen, um den erfassten Partikel zu bestimmen, insbesondere um zu bestimmen, ob es sich hierbei um ein Bakterium oder um ein Nichtbakterium handelt bzw. im weiteren das Bakterium zu bestimmen. Um insbesondere diese kleinen Partikel mit technisch einfachen Mitteln mit ausreichender Genauigkeit zu erfassen, ist gemäß der Erfindung vorgesehen, dass die Bilderfassung zum einen in Dunkelfeldtechnik, d. h. unter Dunkelfeldbeleuchtung, erfolgt und zum anderen lichtempfindliche Pixel des Sensors mehrere Subpixel aufweisen, die zur Bilderfassung genutzt werden. Es versteht sich, dass vorteilhaft alle oder zumindest ein Großteil der lichtempfindlichen Pixel Subpixel aufweist, die zur Bilderfassung genutzt werden, um einerseits eine hohe Auflösung und andererseits eine hohe Dynamik zu gewährleisten. Dies ist insbesondere mit der Dunkelfeldtechnik von Vorteil, bei welcher eine Dunkelfeldbeleuchtung erfolgt, d. h. bei der die zu untersuchende Flüssigkeitsprobe nicht im direkten Strahlengang zwischen Lichtquelle und Sensor liegt, wie dies bei der Hellfeldtechnik üblich ist, sondern vom Sensor nur das Licht, nämlich Streulicht, empfangen wird, welches von den Partikeln in der Flüssigkeitsprobe abgelenkt wird. Die Bilderfassung in der Dunkelfeldtechnik erfolgt also gemäß der Erfindung in der Weise, wie dies beispielsweise von der Dunkelfeldbeleuchtung in der Durchlichtmikroskopie bekannt ist. Hierbei entstehen auf dem Sensorbild die Partikel in heller Farbe vor dunklem Hintergrund. Dies ist insbesondere bei den hier zu bestimmenden sehr kleinen Partikeln von Vorteil, da das aus der Hellfeldtechnik bekannte Überstrahlen wesentlich weniger auftritt und im Übrigen der Sensor auch nicht von direktem Licht der Lichtquelle beaufschlagt ist, weshalb insbesondere in Verbindung mit Nutzung der Subpixel eine wesentlich bessere Erfassung von kleinen Partikeln, wie beispielsweise Bakterien, möglich ist, ohne dass die technischen Voraussetzungen, wie beispielsweise die Auflösung des Sensors, die Qualität der verwendeten optischen Bauteile und dergleichen signifikant erhöht werden müssen.

Dabei ist es gemäß einer Weiterbildung des erfindungsgemäßen Verfahrens besonders vorteilhaft, wenn die Bilderfassung anhand von zweidimensionalen Schwarzweißbildern in unterschiedlichen Ebenen der Flüssigkeitsprobe erfolgt. Da es auf die Farbinformation nicht ankommt, können vielmehr die Subpixel des Sensors, die hierfür sonst zur Verfügung stehen, dafür genutzt werden, die Auflösung des Sensors zu erhöhen bzw. dessen Dynamik zu erhöhen, wie dies gemäß einer Weiterbildung der Erfindung vorteilhaft vorgesehen sein kann.

So wird die Dynamik der Bilderfassung gemäß einer Weiterbildung der Erfindung z. B. dadurch erhöht, dass mindestens ein Pixel des Sensors, vorzugsweise jedoch ein Großteil oder alle Pixel solche Subpixel aufweisen und von diesen Subpixeln jeweils mindestens eines hochverstärkt und mindestens ein weiteres niedrigverstärkt werden. Unter niedrigverstärkt im Sinne der vorliegenden Erfindung kann auch eine Abschwächung verstanden werden, je nachdem welchen Empfindlichkeitsbereich der Sensor aufweisen soll. Bei den heutzutage vielfach verwendeten CCD-Sensoren, deren Pixel z. B. vier Subpixel aufweisen, werden gemäß der vorliegenden Erfindung vorteilhaft zwei dieser Subpixel hochverstärkt (high gained) und die zwei anderen niedrigverstärkt (low gained) bzw. abgeschwächt. Die Zahl der Subpixel ist jedoch grundsätzlich frei wählbar bzw. sensorabhängig und wird den Verfahrensanforderungen entsprechend ausgewählt.

Die Bestimmung mindestens eines Partikels anhand von beispielsweise zweidimensionalen Schwarzweißbildern in unterschiedlichen Ebenen der Flüssigkeitsprobe erfolgt vorteilhaft durch digitale Bildauswertung. Derartige Auswertverfahren zählen grundsätzlich zum Stand der Technik, müssen jedoch für das vorliegende Verfahren entsprechend angepasst werden. Dabei ist es vorteilhaft, wenn mindestens drei, vorzugsweise mindestens vier unterschiedliche Kennzeichen zur Bestimmung oder Klassifizierung eines Partikels verwendet werden. Dabei muss die Bestimmung des Partikels im Sinne der vorliegenden Erfindung nicht notwendigerweise die konkrete Identifizierung des Partikels bedeuten, es kann auch eine Klassifizierung, wie beispielsweise die Feststellung, ob es sich bei dem Partikel um ein Bakterium oder um ein Nichtbakterium handelt, ob es sich um lebendes oder totes Bakterium handelt, um welche Art von Bakterium es sich handelt oder dergleichen, erfolgen.

Ein besonders gut zu erfassendes Kennzeichen eines Partikels ist seine flächenmäßige Erstreckung, die gemäß der Erfindung in einem Bild ermittelt und weiter verwendet wird, in welchem das Partikel im Fokus ist. Dabei gibt nicht nur die größenmäßige Erfassung der Fläche ein Kennzeichen, sondern es kann auch die Form der Fläche ein Kennzeichen bilden oder eine Kombination dieser Merkmale.

Zur Erfassung der flächenmäßigen Erstreckung eines Partikels ist gemäß einer vorteilhaften Weiterbildung des erfindungsgemäßen Verfahrens vorgesehen, dass in dem mittels des Sensors erfassten Bild des Partikels ein Pixelgrenzwert festgesetzt wird, wobei alle Pixel, deren Pixelwert größer oder gleich dem festgesetzten Pixelwert ist, zu 1 und alle Pixel, deren Pixelwert kleiner als der festgesetzte Pixelwert ist, zu 0 gesetzt werden, wonach die flächenmäßige Erstreckung des Partikels erfasst wird. Es erfolgt also eine Digitalisierung des Bildes in schwarze und weiße Pixel, wobei dann beispielsweise die weißen Pixel, also die, deren Pixelwert größer oder gleich dem festgesetzten Pixelgrenzwert ist, die Fläche des Partikels im Bild repräsentieren, sodass durch geeignete Auswertung dieses Schwarzweißbildes sowohl die flächenmäßige Erstreckung als auch die Form der Fläche ermittelt werden kann.

Dabei hat sich in der praktischen Erprobung des Verfahrens herausgestellt, dass es vorteilhaft ist, hier nicht einen absoluten Pixelgrenzwert festzusetzen, sondern die flächenmäßige Erstreckung des Partikels vorteilhaft unter Zugrundelegung mehrere unterschiedlicher festgesetzter Pixelgrenzwerte zu bestimmen. Nur hierdurch ist es bei einigen Partikeln möglich, deren Form zu bestimmen und eine ausreichende Differenzierung von anderen Partikeln herbeizuführen. Es ist von besonderem Vorteil wenn sich die Pixelgrenzwerte automatisch, d. h. selbstanpassend einstellen.

Vorteilhaft wird als ein Kennzeichen eines Partikels dessen Rotation um seine eigene Achse bestimmt. Dieses Kennzeichen ist insbesondere bei der Bestimmung von Bakterien zweckmäßig. Mit diesem Kennzeichen ist es häufig schon möglich, Bakterien von Nichtbakterien bzw. toten Bakterien zu unterscheiden, da die Rotation eines Partikels um die eigene Achse ein typisches Merkmal von lebenden Bakterien allerdings auch von einigen anderen Partikeln ist. Im Weiteren kann die Rotation selbst auch als weiteres Kennzeichen bei der Bestimmung des Partikels, insbesondere eines Bakteriums herangezogen werden.

Gemäß dem erfindungsgemäßen Verfahren kann ein Kennzeichen eines Partikels durch Auswertung einer Reihe von Bildern des Partikels in unterschiedlichen Ebenen erfolgen, die so gewählt sind, dass das Partikel in einigen Bildern im Fokus und in einigen Bildern außerhalb des Fokus, also davor und dahinter liegt, wobei die Anzahl der das Partikel repräsentierenden Pixelwerte bildweise erfasst und die Verteilung der erfassten Anzahlen über die Zahl der Bilder das Kennzeichen bildet. Dies ist eine Art zu erfassen, ob sich das Partikel, wie beispielsweise ein lebendes Bakterium bewegt oder wie beispielsweise ein Staubkorn unverändert in seiner Position in der Flüssigkeit verharrt. Dabei wird vorteilhaft nicht nur die Verteilung der erfassten Anzahlen über die Zahl der Bilder erfasst, sondern gemäß einer Weiterbildung des erfindungsgemäßen Verfahrens die Standardabweichung der erfassten Anzahlen zu dem Mittelwert der erfassten Anzahlen ins Verhältnis gesetzt, um so ein Kennzeichen zu bilden.

Wie eingangs erläutert, wird vorteilhaft nicht nur die flächenmäßige Erstreckung eines Partikels im Fokus erfasst, sondern darüber hinaus auch seine Form, um ein Kennzeichen zu bilden. Die Form eines Partikels kann durch seine Momente bestimmt werden. Dies zählt bei Bildauswertungsverfahren zum Stand der Technik. Momente einer Verteilung sind in der Bildverarbeitung bestimmte gewichtete Mittelwerte aus den Helligkeitswerten der einzelnen Pixel eines Bildes. Sie werden so gewählt, dass sie eine gewisse geometrische Aussage besitzen, wie dies an sich bei der digitalen Bildauswertung zum Stand der Technik zählt, auf die insoweit verwiesen wird.

Alternativ oder zusätzlich kann die Form eines Partikels durch seine inversen Momente bestimmt werden. Gemäß einer Weiterbildung des erfindungsgemäßen Verfahrens kann zur Erfassung der inversen Momente eines Partikels eine Auswertung einer Reihe von Bildern des Partikels in unterschiedlichen Ebenen erfolgen, wobei das Partikel in mindestens einem Bild im Fokus liegt und in einer Anzahl von Bildern davor und dahinter. Dabei werden die Pixelwerte des Bildes einer Fouriertransformation unterzogen, wonach die DC-Anteile, also die nichtfrequenten Anteile des Signals, entfernt oder zumindest verringert, der Rauschanteil der Signale eliminiert und dann eine Momentenbestimmung gemacht wird, wie sie an sich zum Stand der Technik zählt. Hierdurch wird ein Kennzeichen gewonnen, das sich in der Praxis als sehr aussagekräftig erwiesen hat.

Um insbesondere bei der Untersuchung über einen längeren Zeitraum, wie dies bei der Überwachung des Trinkwassers z. B. der Fall ist, sicherzustellen, dass vergleichbare Ergebnisse auch über einen langen Zeitraum erzielt werden, ist gemäß einer Weiterbildung der Erfindung vorgesehen, die Beleuchtungsstärke der Lichtquelle konstant zu halten und hierfür eine Regelung vorzusehen, welche die Ist-Beleuchtungsstärke erfasst, mit einer Soll-Beleuchtungsstärke vergleicht und gegebenenfalls die Lichtquelle entsprechend ansteuert. Dies ist bei dem erfindungsgemäßen Verfahren von besonderer Bedeutung, da der Bildsensor aufgrund der Dunkelfeldbeleuchtung nie direktes Licht von der Lichtquelle erfasst und somit beispielsweise eine Verringerung der Hintergrundhelligkeit nicht notwendigerweise auf eine abfallende Beleuchtungsstärke der Lichtquelle zurückzuführen ist, sondern auch durch Anwachsen von Ablagerungen im Fenster für die Flüssigkeitsprobe liegen kann. Es ist also vorteilhaft ein gesonderter Sensor vorgesehen, mit welchem die Ist-Beleuchtungsstärke der Lichtquelle erfasst werden kann, sodass mittels der Regelung bei nachlassender Lichtstärke dies durch beispielsweise Ansteuerung mit einer höheren Spannung ausgeglichen werden kann.

Die Klassifizierung oder Bestimmung eines mittels der optischen Vorrichtung erfassten Partikels erfolgt typischerweise durch Vergleich von Kennzeichen dieses Partikels mit Kennzeichen einer Kennzeichensammlung, anhand der dann eine Kategorisierung, Klassifizierung oder im Idealfall eine konkrete Bestimmung des Partikels erfolgen kann. Die Bestimmung erfolgt vorteilhaft mit einem nichtlinearen System, vorzugsweise mittels eines neuronalen Netzwerkes, hierdurch kann in der Regel auch ein Ergebnis erzielt werden, wenn die ermittelten Kennzeichen keinen unmittelbaren Rückschluss auf die Art des Partikels zulassen. Die Verwendung eines neuronalen Netzwerkes ist insbesondere dann von Vorteil, wenn, was sich in der Praxis bewährt hat, nicht nur Bilder im Fokus sondern auch unmittelbar davor- und dahinterliegende Bilder ausgewertet werden, da damit die Sicherheit der Klassifizierung oder Bestimmung erhöht werden kann, auch wenn die damit ermittelten Kennzeichen eine gewisse Unschärfe aufweisen.

Alternativ kann die Bestimmung eines Partikels durch Vergleich von erfassten Kennzeichen mit Kennzeichen der Kennzeichensammlung mittels eines linearen Systems erfolgen. Beide Verfahren haben ihre Vor- und Nachteile, wobei im Einzelfall sorgfältig abgewogen werden sollte, in welcher Weise die Auswertung erfolgt.

Um das erfindungsgemäße Verfahren kostengünstig durchführen zu können, ist es einerseits erforderlich, den vorrichtungsmäßigen Aufwand einfach zu halten, andererseits den Rechenaufwand möglichst klein zu halten. Allerdings soll das erfindungsgemäße Verfahren die erforderliche Genauigkeit aufweisen, um mit hoher Zuverlässigkeit zumindest zwischen Bakterien und Nichtbakterien unterscheiden zu können. Hierzu ist gemäß einer Weiterbildung der Erfindung vorgesehen, dass die dem Sensor vorgeschaltete Linse, die erforderlich ist, um auf der Pixelebene des Sensors ein Bild zu erzeugen, eine numerische Apertur zwischen 0,05 und 0,4 aufweist. Eine solche numerische Apertur hat einerseits den Vorteil, dass Linsen einfacher Qualität verwendet werden können, die kostengünstig sind, andererseits die Anzahl der auszuwertenden Bilder nicht zu groß wird, wie dies bei zunehmender Apertur der Fall wäre.

Um weitere Differenzierungsmöglichkeiten bei der Erfassung der Partikel zu geben, ist gemäß der Erfindung vorgesehen, dass Bilder von derselben Flüssigkeitsprobe unter Beleuchtung mit unterschiedlichem Beleuchtungswinkel ausgewertet werden. Hierdurch können die beispielsweise vorbeschriebenen Kennzeichen weiter differenziert werden. Auch kann gegebenenfalls zusätzlich oder alternativ bei der Erstellung dieser Bilder mit Beleuchtung mit Licht unterschiedlicher Wellenlänge gearbeitet werden. Dies stellt eine weitere Differenzierungsmöglichkeit von Kennzeichen dar, die insbesondere für kleine Partikel in Größe von Bakterien von Vorteil sein können.

Mit dem erfindungsgemäßen Verfahren muss nicht notwendigerweise eine konkrete Partikelbestimmung erfolgen, es erfolgt jedoch zweckmäßigerweise eine Klassifikation der Partikel, und zwar in Bakterien, Nichtbakterien und andere Partikel. Eine solche Klassifikation ist insbesondere bei der Trinkwasserüberwachung zweckmäßig.

Dabei kann es insbesondere bei der Trinkwasserüberwachung erforderlich sein, nicht nur die Anzahl der Bakterien im Wasser zu erfassen, sondern auch die Art. So sind beispielsweise E.coli-Bakterien ein Indiz für Fäkalien, also ein Fäkalienindikator. Zu deren Erfassung kann beispielsweise im erfindungsgemäßen Verfahren zunächst einmal eine Klassifikation der ermittelten Partikel in Bakterien und Nichtbakterien erfolgen, wonach in der Flüssigkeitsprobe gezielt eine Keimtötung, beispielsweise durch UV-Licht, Wärme oder dergleichen, herbeigeführt wird. Es wird dann nach einer gewissen Wartezeit, beispielsweise einer halben Stunde nochmals eine Partikelbestimmung derselben Probe durchgeführt und dabei beispielsweise über die Bestimmung der Rotation der Partikel ermittelt, wie sich das Verhältnis zwischen lebenden und toten Bakterien nach der Keimtötung einstellt. Hierdurch kann indirekt z. B. auf den Anteil der E.coli-Bakterien geschlossen werden.

Das erfindungsgemäße Verfahren wird grundsätzlich unter Zugrundelegung einer Kennzeichensammlung angewendet. Eine solche Kennzeichensammlung muss jedoch nicht vollständig vorhanden sein. Diese kann gegebenenfalls mit Inbetriebnahme der Vorrichtung selbstlernend erzeugt oder ergänzt werden. So kann beispielsweise in den ersten Tagen nach Inbetriebnahme der Untersuchungsvorrichtung zunächst nur Wasser untersucht werden, von dem bekannt ist, dass es eine zulässige Partikelbelastung aufweist. Mit den bei diesen Untersuchungen gewonnen Kennzeichen über die im Wasser erfassten Partikel kann eine Kennzeichensammlung angelegt werden, die wiederum Grundlage für weitere Untersuchungen ist, bei denen allerdings dann nicht die Bestimmung der Partikel im Vordergrund stehen, sondern die Übereinstimmung oder Nichtübereinstimmung der Partikelstruktur mit der vorermittelten, welche Basis für die Kennzeichensammlung bildet.

Teile des erfindungsgemäßen Verfahrens sind nachfolgend anhand von zeichnerischen Darstellungen näher erläutert, es zeigen:
- Fig. 1: in stark vereinfachter schematischer Darstellung eine optische Vorrichtung zur Untersuchung einer Flüssigkeitsprobe in Dunkelfeldtechnik,
- Fig. 2: eine optische Vorrichtung nach dem Stand der Technik in Hellfeldtechnik,
- Fig. 3: den Aufbau eines optischen Sensors der optischen Vorrichtung,
- Fig. 4: die Auswertung des Sensorsignals unter Einbeziehung der Subpixel jeweils in Bild- und Signaldarstellung,
- Fig. 5: eine Reihe von Bildern, welche dasselbe Partikel in unterschiedlichen Ebenen zeigt,
- Fig. 6: elf aufeinanderfolgende Bilder desselben Partikels in unterschiedlichen Ebenen,
- Fig. 7: drei digitalisierte Partikeldarstellungen desselben Partikels unter Anwendung unterschiedlicher Grenzwerte jeweils mit einer Grauwertdarstellung zum Vergleich,
- Fig. 8: zwei Kurven, welche die durch die Partikeldarstellungen gemäß Fig. 7b bzw. 7c dargestellten Flächen einschließen und bestimmen,
- Fig. 9: fünfundzwanzig Bilder eines Partikels in aufeinanderfolgenden Ebenen in- und außerhalb des Fokus,
- Fig. 10: die Bildung zweier Häufigkeitsverteilungskurven aufgrund der Bilder gemäß Fig. 9,
- Fig. 11: die aus den Kurven gemäß Fig. 10 gebildete Mittelwertkurve mit Abweichungen zur Bildung eines Kennzeichens,
- Fig. 12: drei Bilder im Zusammenhang mit der Auswertung des Trägheitsmoments als Kennzeichen und
- Fig. 13: ein Amplituden-Frequenz-Diagramm eines fouriertransformierten Bildes ohne DC-Anteil.

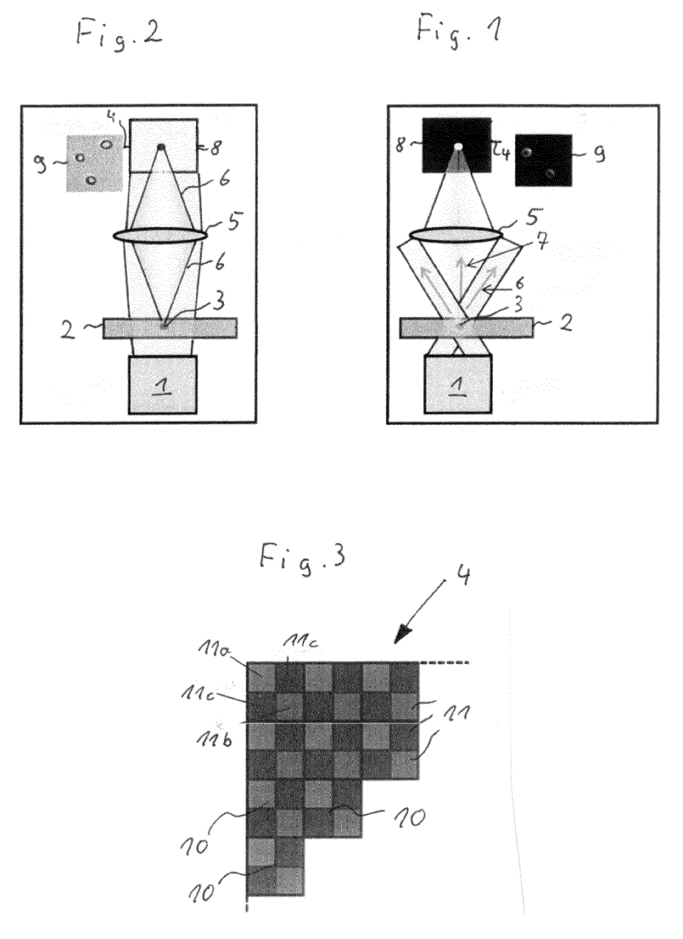

Anhand der Figuren 1 und 2 ist dargestellt, wie sich die Dunkelfeldtechnik, wie sie bei der optischen Vorrichtung nach der Erfindung gemäß Fig. 1 angewendet wird, von der klassischen Hellfeldtechnik, wie sie in Fig. 2 dargestellt ist, unterscheidet. In beiden Figuren ist eine Lichtquelle 1 dargestellt, welche eine in einem Fenster 2 angeordnete Flüssigkeitsprobe zur Verdeutlichung nur mit einem darin befindlichen Partikel 3 anstrahlt. Die im Fenster 2 befindliche Flüssigkeitsprobe ist zwischen der optischen Lichtquelle 1 und einem CCD-Sensor 4 angeordnet, dem eine fokussierende Linse 5 vorgeschaltet ist, die hier eine bildgebende Optik symbolisiert. Die Lichtquelle 1 ist in Fig. 1 beispielsweise mittels einer Blende so ausgerichtet, dass direkte Strahlen 6 das Fenster 2 mit dem Partikel 3 beleuchten, jedoch weder die Linse 5 noch den dahinterliegenden CCD-Sensor 4 direkt treffen. Vom Partikel 3 gelangt lediglich Streulicht 7 zur fokussierenden Linse 5 zu dem dahinterliegenden CCD-Sensor 4. Hieraus ergibt sich ein Bild 8, bei dem das Partikel 3 weiß vor schwarzem Hintergrund dargestellt ist. Das daneben dargestellte Bild 9 verdeutlicht, wie ein Bild von zwei Partikeln bei dieser Beleuchtung praktisch aussehen kann.

Im Vergleich dazu ist in Fig. 2 die Lichtquelle 1 direkt auf das Fenster 2 und den in der Flüssigkeit befindlichen Partikel 3 sowie die Linse 5 und den Sensor 4 gerichtet. Mittels der Linse 5 wird das Partikel 3, welches das direkte Licht 6 abschattet, als schwarzer Punkt im Bild 8, also auf dem CCD-Sensor 4 erzeugt. In dem entsprechend daneben angeordneten Bild 9 sind drei Partikel zu sehen, deren schwarze Ränder sich vor grauem Hintergrund abheben.

Mit der Dunkelfeldbeleuchtung, wie sie in Fig. 1 beispielhaft dargestellt ist, können insbesondere kleine Partikel wesentlich besser im 2D-Bild 8, 9 dargestellt werden als dies bei der Hellfeldbeleuchtung, wie sie anhand von Fig. 2 dargestellt ist, möglich ist. Dort wird der Rand des Partikels 3 im Bild 8 stark überstrahlt. Da die direkten Strahlen 6 auf den CCD-Sensor 4 auftreten, ist der Kontrast zwischen dem dargestellten Partikel und dem Hintergrund extrem hoch und die Auflösung innerhalb des abgebildeten Partikels somit schlecht. Bei dem Bild 9 der Fig. 1 ist deutlich erkennbar, welche nuancierten Abstufungen vor dem schwarzen Hintergrund schon mit bloßem Auge sichtbar sind. Die Dunkelfeldbeleuchtung, wie sie in Fig. 1 dargestellt ist, ist nur beispielhaft zu verstehen. So können beispielsweise statt einer zentralen Lichtquelle 1 gesonderte Lichtquellen vorgesehen sein, welche das Fenster 2 ähnlich wie in Fig. 1 dargestellt schräg durchscheinen. Wesentlich ist jedoch, dass vom Partikel 3 nur Streulicht zur Linse 5 und dem dahinterliegenden Sensor 4 gelangt und keine direkte Strahlung von der Lichtquelle zum Sensor.

Fig. 3 zeigt die Struktur eines CCD-Sensors 4, wie er heute marktüblich ist. Jeder Pixel 10 des Sensors 4 besteht aus vier Subpixeln 11, und zwar aus einem blauen Subpixel 11a, einem roten Subpixel 11 b und zwei grünen Subpixeln 11c und 11d. Die Farben dienen dazu, um jedem Pixel 10 neben der Helligkeitsinformation auch die Farbinformation zu geben, die benötigt wird, um ein Farbbild zu erzeugen.

Beim erfindungsgemäßen Verfahren werden 2D-Bilder in schwarzweiß, d. h. mit Grauwerten erzeugt, die Farbinformation wird nicht benötigt. Die Subpixel 11 werden daher zum Erhöhen von Auflösung und Dynamik eingesetzt.

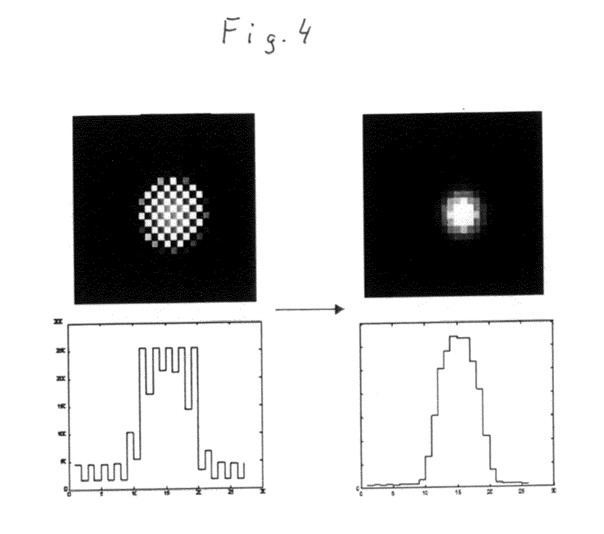

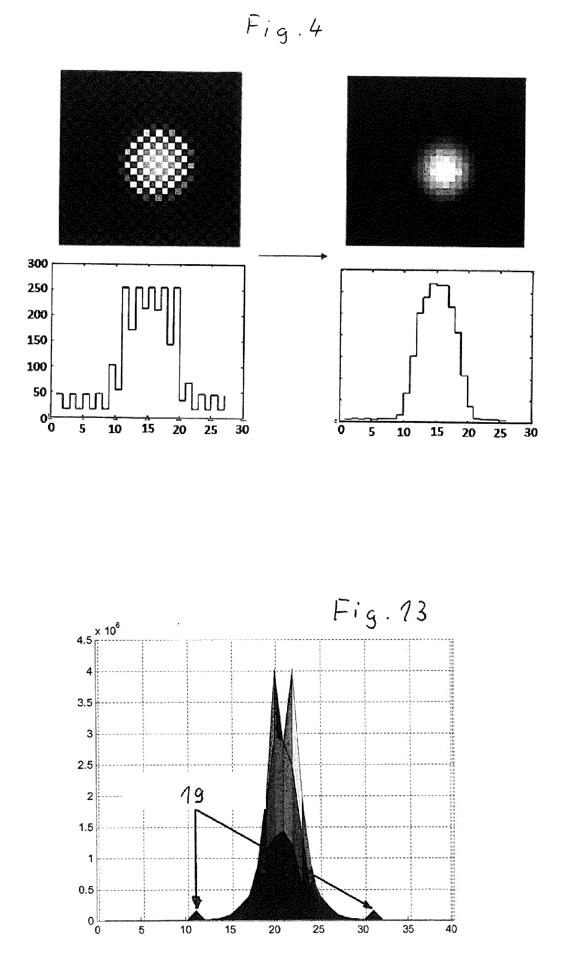

Es handelt sich bei dem in Fig. 3 dargestellten CCD-Sensor 4 um einen Bayer-Sensor mit einer Bayer-Matrix. Statt wie üblich die Subpixel zum Erhalt der Farbinformation auszuwerten, werden diese hier einerseits zur Erhöhung der Auflösung verwendet, wie das entsprechende linke obere Bild der Figur 4 zeigt. Darüber hinaus werden die Subpixel 11 bzw. deren Signale unterschiedlich verarbeitet. So werden die Subpixel 11a und 11b niedrigverstärkt (low gained), wohingegen die Subpixel 11 c und 11 d hochverstärkt (high gained) werden. Hierdurch ergibt sich ein höherer Dynamikbereich, was ebenfalls anhand von Fig. 4 im linken unteren Bild ersichtlich ist. Wie das linke obere Bild, das nach dem vorbeschriebenen Verfahren erzeugt ist, zeigt, weist das mit dem vorbeschriebenen Verfahren erzeugte Bild nicht nur eine höhere Auflösung sondern auch eine höhere Dynamik auf, wie insbesondere die dort erkennbaren Grauwerte verdeutlichen. Die Auflösung ist um den Faktor vier erhöht, die Dynamik ebenfalls erheblich. Wie sowohl in dem linken oberen Bild als auch in der darunter befindlichen Signalkurve ersichtlich ist, wird die erhöhte Auflösung durch die Verwendung der Subpixel 11 als Pixel erreicht, die höhere Dynamik dadurch, dass die Subpixel 11 jeweils paarweise niedrigverstärkt bzw. hochverstärkt werden. Durch Interpolieren der niedrigverstärkten Subpixel mit dem hochverstärkten Subpixel entsteht dann das in Fig. 4 rechts dargestellte Bild, welches eine höhere Auflösung und eine höhere Dynamik als ein bei konventioneller Auslesung des CCD-Sensors erstelltes Bild aufweist. Auch wenn diese verbesserten Bildinformationen auf der in Fig. 4 rechten Bild- bzw. Signaldarstellung so nicht ohne weiteres erkennbar sind, so ist zu berücksichtigen, dass die dort sichtbaren Grauwerte eine andere Qualität aufweisen, als wenn diese unter üblicher Auswertung des CCD-Sensorsignals erfolgt wären.

Um einen mit dem CCD-Sensor 4 erfassten Partikel zu bestimmen oder zumindest zu klassifizieren, ist es erforderlich, verschiedene Kennzeichen des Partikels zu ermitteln und diese dann mit einer vorhandenen Kennzeichensammlung zu vergleichen, um festzustellen, um welche Art von Partikel oder im Idealfall um welchen Partikel es sich handelt. Dabei können Kennzeichensammlungen individuell erstellt werden, beispielsweise für Trinkwasser, für Brauchwasser, für Abwasser, für Wasser aus Kläranlagen oder auch für andere Flüssigkeiten mit darin befindlichen Partikeln. Dabei ist die Kennzeichensammlung auf die Erfordernisse des Anwenders abzustellen. So ist beispielsweise für die Trinkwasseranalyse wesentlich zu erkennen, ob es sich um Bakterien oder Nichtbakterien handelt, im Weiteren, um welche Bakterien. Beispielsweise kann es das Ziel sein, E.coli-Bakterien zu bestimmen, um die Wasserqualität zu überwachen. Solche Kennzeichensammlungen können gegebenenfalls vor Ort selbstlernend erstellt werden, wenn in einer Anzahl von Voruntersuchungen Partikel bestimmt werden, die in ihrer Form und in ihrer Anzahl als zulässig und akzeptabel festgestellt worden sind. Dann können mit einer solchen selbsttätig erstellten Kennzeichensammlung Abweichungen von der zuvor erfassten Qualität festgestellt werden. Es versteht sich, dass eine Kennzeichensammlung beispielsweise für die Überwachung von Trinkwasser auch ortsabhängig, d. h. an verschiedenen Orten, unterschiedlich sein kann, da die Bakterienarten, die das Wasser belasten können, orts- und klimaabhängig variieren. Je mehr Kennzeichen eines bilderfassten Partikels mit einem Kennzeichen in der Kennzeichensammlung übereinstimmen, um so genauer ist die Bestimmung. Es können einige wenige sein, die zum Vergleich herangezogen werden oder einige hundert oder gar mehr. Die Auswertung erfolgt zweckmäßigerweise über ein neuronales Netzwerk, kann jedoch auch mittels eines linearen Gleichungssystems erfolgen. Es hat sich jedoch herausgestellt, dass für die Frage, ob es sich um ein Bakterium oder ein Nichtbakterium handelt, ein Vergleich von mindestens drei Kennzeichen, vorteilhaft mindestens vier Kennzeichen, genügt, um dies mit ausreichender Zuverlässigkeit zu bestimmen. In besonderen Fällen kann die Anzahl der Kennzeichen deutlich höher sein.

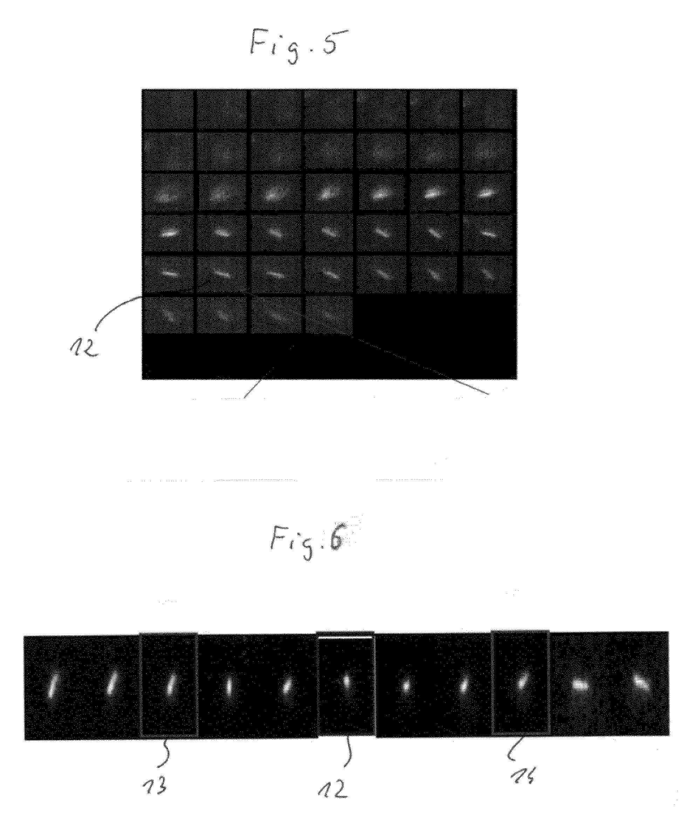

Die Erfassung einer Flüssigkeitsprobe mit den darin befindlichen quasi stationären Partikeln erfolgt durch eine Vielzahl von Bildern paralleler Ebenen. Es werden also bei der Bildauswertung nach einer ersten Objektprüfung, welche z. B. übergroße Objekte wie Luftblasen und dergleichen sowie offensichtlich nicht auswertbare Bereiche von der weiteren Auswertung ausschließt (Integritätsprüfung), für jeden bilderfassten Partikel Gruppen von Bildern desselben Partikels erstellt, die diesen Partikel in unterschiedlichen Ebenen darstellen. Da bedingt durch die Apertur der bildgebenden Linse 5 der optischen Vorrichtung eine konturenscharfe Darstellung nur in der Fokusebene möglich ist, erscheinen diese Partikel in den Gruppen von Bildern typischerweise in mehreren (unscharfen) Vorfokuspositionen, in einer oder mehreren Fokuspositionen und in mehreren (unscharfen) Nachfokuspositionen. Solche Bilder eines Partikels sind beispielsweise in Fig. 5 dargestellt, die 39 Bilder desselben Partikels im Fokus und außerhalb des Fokus zeigt. Zu diesen Bildern wird rechnerisch erfasst, in welchem Bild bzw. in welchen Bildern das Partikel 3 im Fokus dargestellt ist. In Fig. 5 ist dieses Bild mit dem Partikel 3 im Fokus mit 12 gekennzeichnet. Die Berechnung erfolgt in an sich bekannter Weise mittels eines Sobel-Operators, also eines einfachen Kanten-Detektions-Filters, der dies ermittelt.

Grundsätzlich erfolgt die Auswertung eines Kennzeichens eines Partikels im fokussierten Bild, es sei denn, dass das Kennzeichen gerade auf eine Eigenschaft zwischen fokussiertem und nichtfokussiertem Bild abzielt. Die Auswertung wird jedoch, wie Versuche ergeben haben, deutlich stabiler, wenn nicht nur das im Fokus befindliche Bild 12, sondern jeweils auch ein außerhalb des Fokus liegendes Bild im Vorfokusbereich 13 sowie im Nachfokusbereich 14 ausgewertet wird, wobei dann der Einsatz eines neuronalen Netzwerkes zweckmäßig ist, um auch diese "unscharfen" Kennzeichen zuzuordnen (Fig. 6).

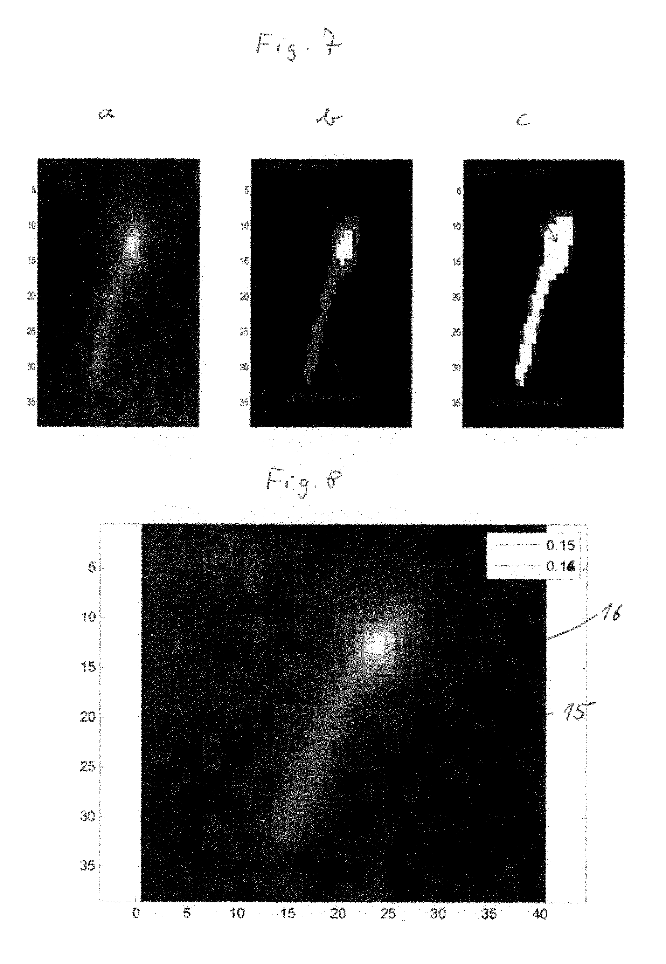

Ein wesentliches Kennzeichen eines Partikels ist stets seine Fläche im Fokus, dabei ist die Größe der Fläche ein Kennzeichen, die Form der Fläche ein anderes Kennzeichen. Um diese Größen zu erfassen, ist eine Abgrenzung des Partikels im Bild festzulegen. Dies erfolgt typischerweise durch Festlegung eines Grenzwertes, also eines Grauwertes des Bildes, der einem bestimmten Pixelwertes entspricht. Mittels dieses Grenzwertes wird ein reines Schwarzweißbild erzeugt, d. h. alle Pixel, deren Pixelwerte gleich oder kleiner dieses Grenzwertes sind, werden schwarz, alle anderen weiß dargestellt. Anhand der Figuren 7a, 7b und 7c ist dargestellt, wie sich eine Veränderung dieses Grenzwertes auf das Bild auswirkt. Es sind in den Bildern nach Fig. 7 nur die weißen Flächen zu betrachten, die grauen, schattenartigen Flächen dienen hier nur der Verdeutlichung der unterschiedlichen Grenzwerte und wären normalerweise schwarz. Die grauen schattenartigen Flächen zeigen die wirkliche Form des Partikels. Deutlich sichtbar ist in Fig. 7a, dass der Grenzwert, der dort zu 47 % des maximalen Pixelwertes gesetzt worden ist, vergleichsweise hoch ist, da ein Großteils des Partikels in den Schwarzbereich fällt und hier vermutlich wesentliche Charakteristika, die ein Kennzeichen der Fläche sind, verloren gehen. In Fig. 7b ist der Grenzwert auf 30 % festgesetzt. Hier ergibt sich schon eine wesentlich abweichende Form des Partikels im Vergleich zu der Darstellung nach Fig. 7a. Wird jedoch der Grenzwert auf 20 % heruntergesetzt, dann ergibt sich das Bild gemäß Fig. 7c, in dem die deutlich längliche Form des Partikels sichtbar wird, die gleichzeitig ein wesentliches Kennzeichen dieses Partikels ist. Das erfindungsgemäße Verfahren sieht nun vor, den Grenzwert zu variieren und zu ermitteln, ob sich bei unterschiedlichen Grenzwerten insbesondere die Form des Partikels signifikant ändert, um dann den Grenzwert heranzuziehen, welcher dieser ausgeprägten Form Rechnung trägt.

Nachdem durch Varianz des Grenzwertes das Schwarzweißbild erzeugt worden ist, welches Grundlage für die weitere Auswertung bildet, wird die Fläche des Partikel im Bild durch eine abschnittsweise um die weiße Fläche herumgelegte Hyperbelkurve bestimmt, welche die Fläche definiert, wie dies in Fig. 8 dargestellt ist. Durch Integrieren dieser Kurve kann die eingeschlossene Fläche, also die zweidimensionale Größe des Partikels ermittelt werden. Die entsprechende Kurve ist mit 15 gekennzeichnet. Zum Vergleich ist in Fig. 8 eine Kurve 16 aufgezeichnet, die sich ergibt, wenn das Bild gemäß Fig. 7b zugrundegelegt wird. Es wird deutlich, dass gerade die Varianz des Grenzwertes dazu führt, ein charakteristisches Kennzeichen hinsichtlich der Form zu schaffen.

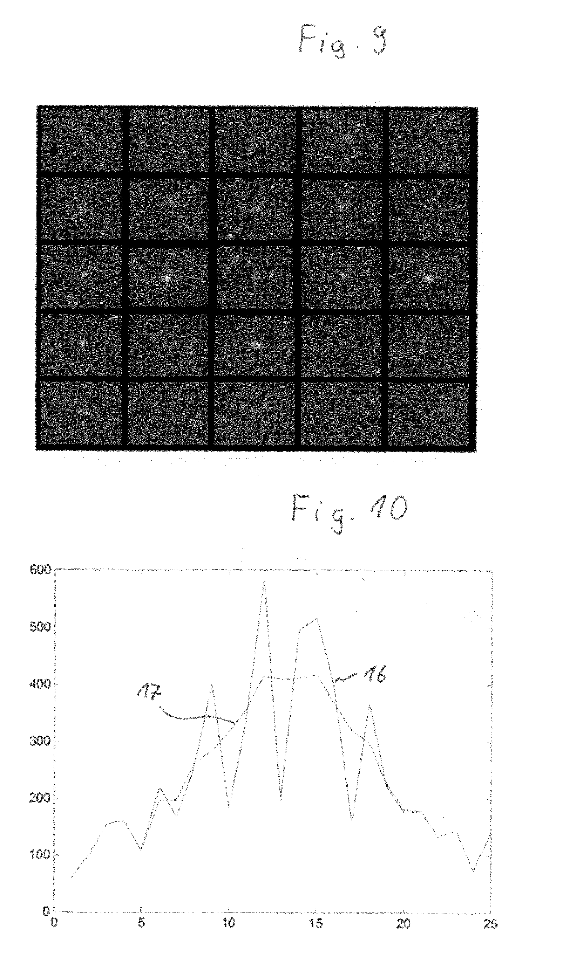

Bei der Betrachtung eines Bildstapels ist es häufig zu beobachten, dass sich die Fläche und Form des erfassten Partikels innerhalb und außerhalb des Fokus ändert, wie dies bei den Bildern gemäß Fig. 5 und Fig. 6 sichtbar ist. Während sich bei Fig. 5 im Wesentlichen die Position ändert, die übrigen Änderungen eher fokusbedingt sind, ändert sich bei dem anhand der Bilder in Fig. 6 erfassten Partikel offensichtlich auch die Form. Diese Änderung wird durch eine Bewegung des Partikels verursacht, d. h. eine Bewegung des Partikels von einem Bild zum nächsten. Wenn ein Partikel, der nicht kugelförmig ist, sich dreht, wird das Licht in Abhängigkeit davon, wie schnell und um welche Achse er sich dreht, beeinflusst. Bei der Beobachtung mit dem Auge wird dies als Blinken wahrgenommen. Dies ist eine Eigenschaft, die häufig bei lebenden Bakterien zu beobachten ist, nicht jedoch bei toten Bakterien oder selten bei Partikeln, die keine Bakterien sind. Diese Eigenschaft ist daher mit ein wichtiges Kennzeichen zur Bestimmung, ob es sich um ein Bakterium oder um einen anderen Partikel handelt. Um dieses Kennzeichen zu ermitteln, wird zunächst ein Stapel von Bildern, wie er beispielsweise in Fig. 9 dargestellt ist, zur Auswertung herangezogen. Die vorliegenden 25 Bilder, die den hier zu bestimmenden Partikel in- und außerhalb des Fokus zeigen, werden wie folgt ausgewertet:

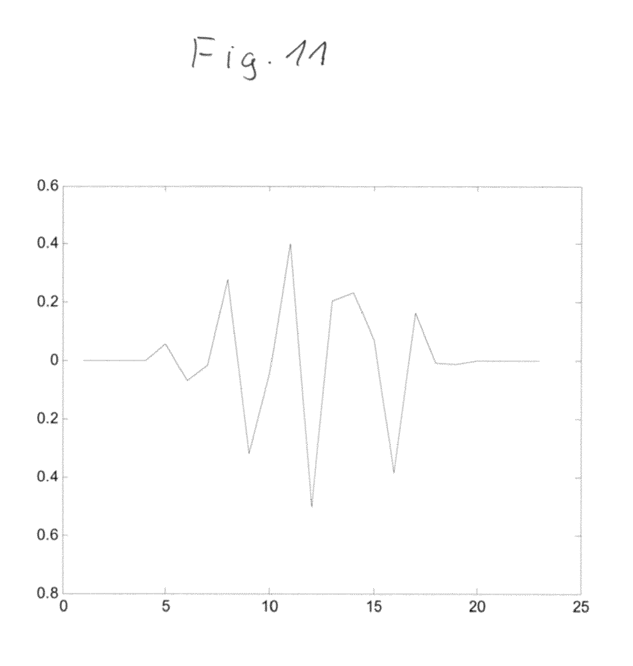

Nachdem der zu bestimmende Partikel und die dafür in Frage kommenden Bilder gewählt worden sind, so wie diese in Fig. 9 dargestellt sind, wird zunächst eine Fokuskurve erstellt. Auf der horizontalen Achse wird die Anzahl der Bilder und auf der vertikalen Achse die Helligkeit der in jedem Bild ermittelten vier bis sieben hellsten Pixel, d. h. die Pixel, welche den höchsten Pixelwert haben, aufgeführt, und zwar jeweils unter Bildung des Mittelwertes dieser vier bis sieben Pixeln, sodass sich die aus Fig. 10 ersichtliche Kurve 16 ergibt, welche deutlich sichtbare Spitzen aufweist. Diese Kurve 16 wird gefiltert und so geglättet. Diese geglättete Kurve ist in Fig. 10 mit 17 gekennzeichnet. Schließlich wird zu der Kurve 17 der Mittelwert und die Standardabweichung ermittelt. Diese Standardabweichung ist ein Kennzeichen für den erfassten Partikel. Je höher dieser Wert ist, um so größer ist dieser "Blink-Effekt" des erfassten Partikels, was auf eine Bewegung des Partikels, insbesondere eine Drehung um eine Achse hinweist. Diese Kurven 16 und 17 in Fig. 10 werden voneinander subtrahiert, sodass sich die in Fig. 11 dargestellte Kurve ergibt, welche den Mittelwert und die Abweichungen hiervon darstellen.

Ein weiteres Kennzeichen zum Bestimmen oder Klassifizieren von Partikeln ist die Momentenbildung, welche bei der Bildverarbeitung, insbesondere Auswertung und Klassifizierung, zum Stand der Technik zählt. Diese erfolgt regelmäßig anhand von Schwarzweißbildern, vorzugsweise nach deren Digitalisierung in schwarz- und weiß-Werte, wie dies einleitend bereits beschrieben worden ist.

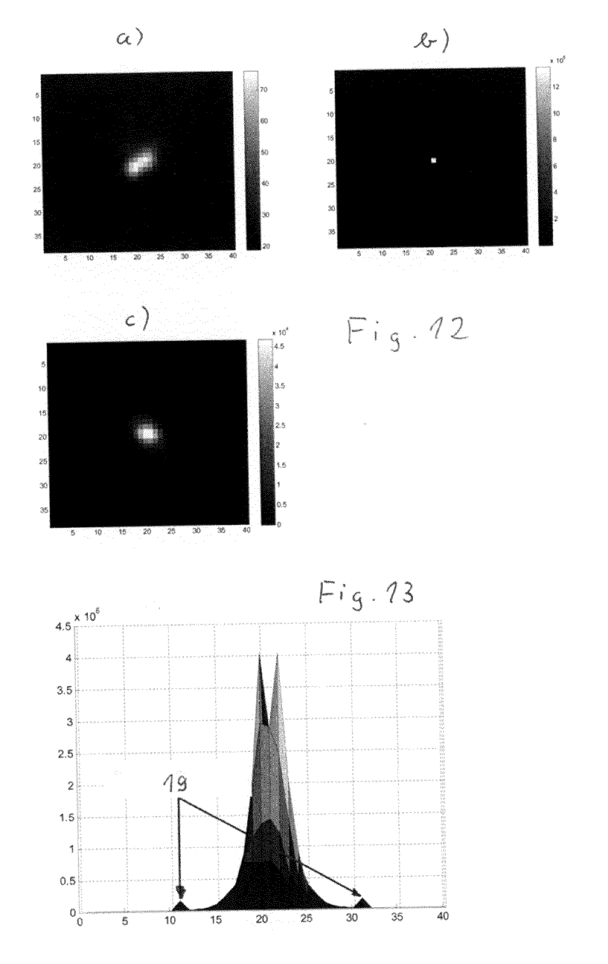

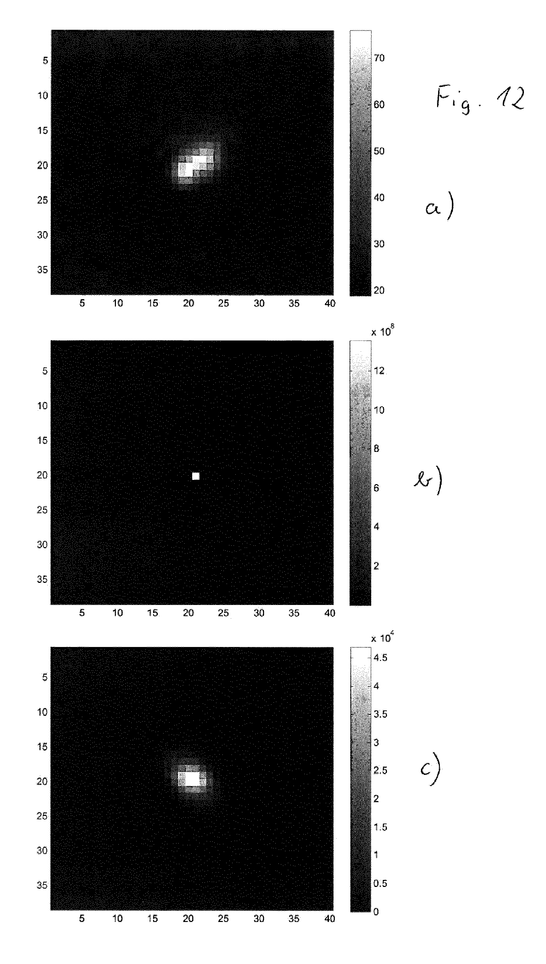

Ein weiteres Kennzeichen ist das Trägheitsmoment (auch inverses Moment genannt) eines Partikels, also auch ein Kennzeichen, welches die räumliche Erstreckung des Partikels erfasst. Ausgangspunkt dieses Kennzeichens sind beispielsweise sieben Bilder, von denen eins im Fokus und drei auf jeder Seite des Fokus angeordnet sind, so wie dies in Fig. 6 durch das mittlere Bild 12 sowie ein Vorfokusbild 13 und die beiden zwischen den Bildern 12 und 13 liegenden Bilder sowie ein Nachfokusbild 14 und die beiden zwischen dem Fokusbild und dem Nachfokusbild liegenden Bildern gegeben ist. Von jedem dieser sieben Bilder, von denen eines beispielhaft in Fig. 12a dargestellt ist, wird eine Fouriertransformation ausgeführt, sodass sich ein Bild wie in Fig. 12b dargestellt, ergibt. Die Fouriertransformation ergibt jeweils den in dem jeweiligen Bild abgebildeten Partikel im reziproken Raum (in Analogie zum reziproken Gitter der Kristallographie). Es werden dann die Gleichstromkomponenten (DC-Komponenten) entfernt oder zumindest verringert, sodass sich ein Bild wie in Fig. 12c dargestellt ist, ergibt. Auch wird das Rauschen durch einen geeigneten Filter eliminiert, wonach das zentrale Moment jedes der Objekte der sieben Bilder berechnet wird. In Fig. 13 ist eine solche Kurve eines Bildes dargestellt, wobei die horizontale Achse die Frequenz und die vertikale Achse die Amplitude darstellt. Der DC-Anteil ist bei dem in Fig. 13 dargestellten Diagramm bereits entfernt, die Rauschanteile 19 sind dort noch vorhanden. Der Maximal- und Minimalwert dieses zentralen Momentes bildet jeweils ein Kennzeichen des untersuchten Partikels. Die vorstehend beschriebenen Kennzeichen, genügen in der Regel, um zu bestimmen, ob es sich bei dem untersuchten Partikel um ein Bakterium oder ein Nichtbakterium handelt.

Eine weitere Varianz von Kennzeichen kann dadurch erzielt werden, dass die Reihen von Bildern in unterschiedlichen Ebenen von derselben Flüssigkeitsprobe mit Beleuchtung aus unterschiedlichen Beleuchtungswinkeln ausgewertet werden und/oder mit Beleuchtung mit Licht unterschiedlicher Wellenlänge. Welche Kennzeichen für welche Partikel, insbesondere Bakterien, besonders geeignet sind, um diese zu klassifizieren oder gar zu bestimmen, bedarf empirischer Ermittlungen. Die vorstehend beschriebenen Kennzeichen sind jedoch besonders geeignet, um Bakterien von Nichtbakterien zu unterscheiden, und zwar genügen dazu in der Regel drei oder vier dieser Kennzeichen, um diese Klassifizierung mit ausreichend hoher Sicherheit zu treffen. Eine solche Klassifizierung ist jedoch insbesondere bei der Trinkwasseruntersuchung von großer Bedeutung, da nach erfolgter Klassifizierung dann die Bestimmung im Einzelnen bzw. eine Unterklassifizierung erfolgen kann, und zwar typischerweise der Bakterien und nicht der übrigen Partikel.

### Bezugszeichenliste

- 1: Lichtquelle
- 2: Fenster
- 3: Partikel
- 4: CCD-Sensor (Ebene des Sensors)
- 5: fokussierende Linse
- 6: direkte Strahlen
- 7: Streulicht
- 8: Sensorbild
- 9: Beispielbild
- 10: Pixel
- 11: Subpixel
- 11a: blauer Subpixel
- 11b: roter Subpixel
- 11c: grüner Subpixel
- 11d: grüner Subpixel
- 12: mittleres Bild im Fokus
- 13: Vorfokusbild
- 14: Nachfokusbild
- 16: ungeglättete Kurve
- 17: geglättete Kurve
- 18: Mittelwertkurve
- 19: Rauschanteile

## Patentansprüche

1. Verfahren zum Bestimmen von Partikeln, insbesondere Bakterien in Flüssigkeit, unter Verwendung einer bildgebenden optischen Vorrichtung mit einer Lichtquelle, mit einem optischen Sensor mit einem Feld von lichtempfindlichen Pixeln und mit einer zwischen Lichtquelle und Sensor angeordneten zu untersuchenden Flüssigkeitsprobe, bei dem Kennzeichen von mindestens einem bildmäßig erfassten Partikel mit Kennzeichen einer Kennzeichensammlung zur Bestimmung des erfassten Partikels verglichen werden, **dadurch gekennzeichnet, dass** die Bilderfassung in Dunkelfeldtechnik erfolgt und dass ein lichtempfindliches Pixel mehrere Subpixel aufweist, die zur Bilderfassung genutzt werden.

2. Verfahren nach Anspruch 1, **dadurch gekennzeichnet, dass** der mindestens eine Partikel anhand von zweidimensionalen schwarzweiß-Bildern in unterschiedlichen Ebenen der Flüssigkeitsprobe erfasst wird.

3. Verfahren nach Anspruch 1 oder 2, **dadurch gekennzeichnet, dass** die Subpixel zur Erhöhung der Auflösung und/oder der Empfindlichkeit des Sensors verwendet werden.

4. Verfahren nach einem der vorhergehenden Ansprüche, **dadurch gekennzeichnet, dass** mindestens ein Pixel des Sensors mehrere Subpixel aufweist, von denen mindestens eines hochverstärkt und mindestens eines niedrig verstärkt werden.

5. Verfahren nach einem der vorhergehenden Ansprüche, **dadurch gekennzeichnet, dass** mindestens drei, vorzugsweise vier unterschiedliche Kennzeichen eines Partikels zu dessen Bestimmung verwendet werden.

6. Verfahren nach einem der vorhergehenden Ansprüche, **dadurch gekennzeichnet, dass** als ein Kennzeichen eines Partikels seine flächenmäßige Erstreckung in dem Bild, in welchem das Partikel im Fokus ist, verwendet wird.

7. Verfahren nach Anspruch 6, **dadurch gekennzeichnet, dass** zur Erfassung der flächenmäßigen Erstreckung des Partikels ein Pixelgrenzwert festgesetzt wird, wobei alle Pixel, deren Pixelwert größer oder gleich dem festgesetzten Pixelgrenzwert ist, zu 1 und alle Pixel, deren Pixelwert kleiner als der festgesetzte Pixelgrenzwert ist, zu 0 gesetzt werden, wonach die flächenmäßige Erstreckung des Partikels erfasst wird.

8. Verfahren nach Anspruch 7, **dadurch gekennzeichnet, dass** die flächenmäßige Erstreckung des Partikels unter Zugrundelegung mehrerer unterschiedlicher festgesetzter Pixelgrenzwerte erfolgt.

9. Verfahren nach einem der vorhergehenden Ansprüche, **dadurch gekennzeichnet, dass** als ein Kennzeichen eines Partikels dessen Rotation um seine eigene Achse bestimmt wird.

10. Verfahren nach einem der vorhergehenden Ansprüche, **dadurch gekennzeichnet, dass** ein Kennzeichen eines Partikels durch Auswertung einer Reihe von Bildern des Partikels in unterschiedlichen Ebenen erfolgt, bei denen das Partikel in einigen Bildern im Fokus und in einigen Bildern ausserhalb des Fokus liegt, wobei die Anzahl der das Partikel repräsentierenden Pixelwerte bildweise erfasst und die Verteilung der erfassten Anzahlen über die Zahl der Bilder das Kennzeichen bildet.

11. Verfahren nach Anspruch 10, **dadurch gekennzeichnet, dass** die Standardabweichung der erfassten Anzahlen zu dem Mittelwert der erfassten Anzahlen ein Kennzeichen bildet.

12. Verfahren nach einem der vorhergehenden Ansprüche, **dadurch gekennzeichnet, dass** als ein Kennzeichen die Form eines Partikels verwendet wird.

13. Verfahren nach Anspruch 12, **dadurch gekennzeichnet, dass** die Form eines Partikels durch seine Momente bestimmt wird.

14. Verfahren nach Anspruch 12, **dadurch gekennzeichnet, dass** die Form eines Partikels durch seine inversen Momente bestimmt wird.

15. Verfahren nach Anspruch 14, **dadurch gekennzeichnet, dass** zur Erfassung der inversen Momente eines Partikels eine Auswertung einer Reihe von Bildern des Partikels in unterschiedlichen Ebenen erfolgt, wobei das Partikel in mindestens einem Bild im Fokus liegt, und in einer Anzahl von Bildern davor und dahinter, wobei die Pixelwerte jedes Bildes einer Fouriertransformation unterzogen werden wonach die DC-Anteile entfernt oder zumindest verringert werden, der Rauschanteil der Signale eliminiert und dann eine Momentenbestimmung erfolgt.

16. Verfahren nach einem der vorhergehenden Ansprüche, **dadurch gekennzeichnet, dass** die Beleuchtungsstärke der Lichtquelle konstalt gehalten wird und dass eine Regelung vorgesehen ist, welche die Beleuchtungsstärke vorzugsweise mittels des Sensors erfasst und die Lichtquelle entsprechend ansteuert.

17. Verfahren nach einem der vorhergehenden Ansprüche, **dadurch gekennzeichnet, dass** die Bestimmung eines Partikels durch Vergleich von erfassten Kennzeichen mit Kennzeichen der Kennzeichensammlung mittels eines nicht linearen Systems, vorzugsweise mittels eines neuronalen Netzwerkes, erfolgt.

18. Verfahren nach einem der vorhergehenden Ansprüche, **dadurch gekennzeichnet, dass** die Bestimmung eines Partikels durch Vergleich von erfassten Kennzeichen mit Kennzeichen der Kennzeichensammlung mittels eines linearen Systems erfolgt.

19. Verfahren nach einem der vorhergehenden Ansprüche, **dadurch gekennzeichnet, dass** eine dem Sensor vorgeschaltete bilderzeugende Linse verwendet wird, die eine numerische Apertur zwischen 0,05 und 0,4 aufweist.

20. Verfahren nach einem der vorhergehenden Ansprüche, **dadurch gekennzeichnet, dass** Bilder von derselben Flüssigkeitsprobe mit Beleuchtung mit unterschiedlichem Beleuchtungswinkel ausgewertet werden.

21. Verfahren nach einem der vorhergehenden Ansprüche, **dadurch gekennzeichnet, dass** Bilder von derselben Flüssigkeitsprobe mit Beleuchtung mit Licht unterschiedlicher Wellenlänge nacheinander ausgewertet werden.

22. Verfahren nach einem der vorhergehenden Ansprüche, **dadurch gekennzeichnet, dass** eine Klassifikation das Partikel in Bakterien, Nicht-Bakterien und andere Partikel erfolgt.
